# EUROPÄISCHE PATENTSCHRIFT

(11) **EP 3 778 073 B1**
(45) Veröffentlichungstag und Bekanntmachung des Hinweises auf die Patenterteilung: **13.08.2025**
(21) Anmeldenummer: 20191267.2
(22) Anmeldetag: 20.11.2013
(51) Int. Cl.: B22F 10/73, B22F 12/55, B22F 12/90, B22F 3/105, B29C 64/153, B29C 64/35, B29C 64/357, B33Y 30/00, B33Y 40/20, B22F 10/28

(54) **VORRICHTUNG ZUM HERSTELLEN VON DREIDIMENSIONALEN OBJEKTEN**
DEVICE FOR PRODUCING THREE-DIMENSIONAL OBJECTS
DISPOSITIF DE CONSTRUCTION D'OBJETS TRIDIMENSIONNELS

(30) Priorität: 15.01.2013 DE 102013000511
(43) Veröffentlichungstag der Anmeldung: 17.02.2021
(62) Teilanmeldung aus: 13811349.3
(73) Patentinhaber: Concept Laser GmbH, 96215 Lichtenfels (DE)
(72) Erfinder: Herzog, Frank Carsten, 96215 Lichtenfels (DE)
(74) Vertreter: Hafner & Kohl PartmbB

(56) Entgegenhaltungen:
- EP-A1- 2 156 942
- EP-A1- 2 191 922
- EP-A1- 2 502 729
- DE-A1- 102007 029 052
- DE-A1- 102009 020 987

## Beschreibung

Die Erfindung betrifft eine Vorrichtung zum Herstellen von dreidimensionalen Objekten gemäß den Merkmalen des Oberbegriffes des Anspruches 1. Derartige Vorrichtungen sind unter den Namen Lasersintereinrichtung (SLS) oder Laserschmelzeinrichtung (SLM) bekannt. Das pulverförmige Aufbaumaterial wird in einer Dosierkammer bevorratet, durch eine Aufbringvorrichtung schichtweise in die Baukammer verbracht und die jeweils oberste Schicht Aufbaumaterial in der Baukammer wird durch eine Bestrahlungseinrichtung an vorgegebenen Stellen verfestigt.

Aus DE 10 2007 018 601 A1 ist es bekannt, innerhalb der Vorrichtung eine Fördereinrichtung zum Transport des Aufbaumaterials von einem oder mehreren Vorratsbehältern zur Dosierkammer vorzusehen.

Nicht in DE 10 2007 018 601 A1 gezeigt, aber allgemein bekannt, ist es, dass das Aufbaumaterial vor dem Verfestigen beheizt werden kann. Hierfür sind Heizvorrichtungen unterhalb, oberhalb oder seitlich der Baukammer vorzusehen.

Die Heizvorrichtungen und auch andere Vorrichtungen zur Behandlung oder Kontrolle des Aufbaumaterials sind dabei so auszulegen, dass sie für alle in der Lasersinter- oder Laserschmelzanlage verarbeiteten Aufbaumaterialien geeignet sind.

DE 10 2009 020 987 A1 offenbart eine additive Fertigungsvorrichtung.

Der Erfindung liegt daher die Aufgabe zugrunde, eine Vorrichtung zum Herstellen von dreidimensionalen Objekten mit den Merkmalen des Oberbegriffs des Anspruches 1 derart weiterzubilden, dass die Handhabung und Kontrolle des Aufbaumaterials verbessert ist. Diese Aufgabe wird durch die Merkmale des Anspruches 1 gelöst, vorteilhafte Weiterbildungen der Erfindung ergeben sich aus den Unteransprüchen.

Die Erfindung ist durch die Gegenstände der beigefügten Ansprüche definiert. Als Kern der Erfindung wird es angesehen, dass die Zuleitungen zu den Dosierkammern oder der Dosierkammer, derart redundant ausgelegt werden, dass für wenigstens ein Aufbaumaterial ein eigener Kreislauf oder Teilkreislauf vorhanden ist und für ein oder mehrere andere Aufbaumaterialien ein zweiter oder mehr Teilkreisläufe. Dadurch werden zwei Vorteile realisiert. Da die Förderelemente für dieses eine Aufbaumaterial nicht mehr ausgetauscht oder gereinigt werden müssen, werden Verunreinigungen des Aufbaumaterials auf dem Transportweg vermieden. Zum anderen wird zusätzlich der Umbau- und Reinigungsaufwand verringert, da die Förderelemente wenigstens eines Aufbaumaterials nicht mehr gewechselt werden müssen.

Hinsichtlich einer redundanten Ausführung sind zwei Hauptausgestaltungen denkbar.

Zum Einen können alle Elemente eines Transportkreislaufes redundant ausgelegt werden. Dann sind für ein erstes Aufbaumaterial eine eigene Dosierkammer, Vorratskammer, Fördereinrichtung, Überlaufkammer und diese verbindende Leitungen bzw. Schläuche vorzusehen. Je nach Aufbau können einzelne Elemente weggelassen oder hinzugefügt werden, wobei sich das Weglassen oder Hinzufügen durch den grundsätzlichen Aufbau einer Lasersinter- oder Laserschmelzvorrichtung ergibt.

In einer Alternative sind lediglich die Förderelemente, also die Leitungen bzw. Schläuche, redundant ausgelegt, während die Dosierkammer, Überlaufkammer, Fördereinrichtung und Pulverrückgewinnungseinrichtung auszutauschen oder zu reinigen sind. Die Elemente eines Pulverkreislaufes, die keine Förderelemente sind, werden im Folgenden Aufbaumaterialvorratskammern oder Pulvervorratskammern genannt. Der Austausch und/oder die Reinigung der Pulvervorratskammern ist dabei erheblich einfacher, als der komplette Austausch eines kompletten Transportkreislaufes, der zusätzlich die Förderelemente umfasst. Durch die Austauschbarkeit oder die Reinigung der Pulvervorratskammern wird eine kompakte Bauweise der Lasersinter- oder Laserschmelzvorrichtungen beibehalten.

Andererseits ist es aufgrund der Entwicklung von Nachfüllvorrichtungen möglich geworden, beispielsweise die Dosierkammern erheblich zu verkleinern. Gleiches gilt für die Überlaufkammern, die mit einer Ableitung versehen werden und daher ständig entleert werden können. Es ist daher möglich, auch ohne wesentliche Vergrößerung der Gesamtfläche oder des Gesamtvolumens der Lasersinter- oder Laserschmelzanlage auch die Pulvervorratskammern zumindest teilweise redundant auszuführen. Redundanz bedeutet, dass für einen Transportschritt des Aufbaumaterials, beispielsweise den Transport von einer Nachfüllkammer zu einer Dosierkammer, zwei oder mehr Transport- bzw. Förderelemente vorhanden sind.

Vorteilhafterweise können an wenigstens einem Förderelement eine Sensorvorrichtung und/oder eine Aufbaumaterialbehandlungseinrichtung angeordnet sein. Da wenigstens ein Förderelement genau einem Aufbaumaterial zugeordnet ist, können an diesem Förderelement aufbaumaterialspezifische Sensoreinrichtungen und/oder Aufbaumaterialbehandlungseinrichtungen angeordnet sein. Dabei kann es sich um Heizvorrichtungen, Kühleinrichtungen, Temperatursensoren, Drucksensoren oder auch Restsauerstoffsensoren handeln. Diese können in Abhängigkeit der Dichte des Aufbaumaterials, seines Transportverhaltens, seiner elektrischen oder Wärmeleitfähigkeit optimiert werden.

Weiterhin ist es möglich, die Form und/oder das Material und/oder die Innenbeschichtung des Förderelementes auf das Aufbaumaterial abzustimmen. Wird durch ein Förderelement beispielsweise Aluminiumpulver transportiert, so muss dieses einem größeren Gewicht standhalten als bei einem Transport eines Kunststoffpulvers. Auch kann vorgesehen sein, den Querschnitt eines Förderelementes zu vergrößern, wenn das darin transportierte Pulver eine höhere Neigung zum Verklumpen aufweist, als andere Pulver.

Auch bei der Ableitung des Aufbaumaterials ergibt sich bei einer redundanten Anordnung von Ableitungen Optimierungspotenzial. Beispielsweise kann zwischen einer Überlaufkammer und einer Pulverrückgewinnungseinrichtung ein Förderelement vorgesehen werden, in dem ein für das zu transportierende Aufbaumaterial optimierter Filter eingesetzt ist. Dieser Filter kann statt dessen oder zusätzlich auch in der Pulverrückgewinnungseinrichtung verwendet werden.

Die Erfindung wird anhand von Ausführungsbeispielen in den Zeichnungsfiguren näher erläutert. Diese zeigen
Fig. 1 eine Vorrichtung mit geschlossenen Pulverkreisläufen,
Fig. 2 verdrehbare Dosier- und Überlaufkammern,
Fig. 3 eine nicht erfindungsgemäße Vorrichtung mit austauschbaren Pulvervorratskammern und
Fig. 4 Anschlusselemente.

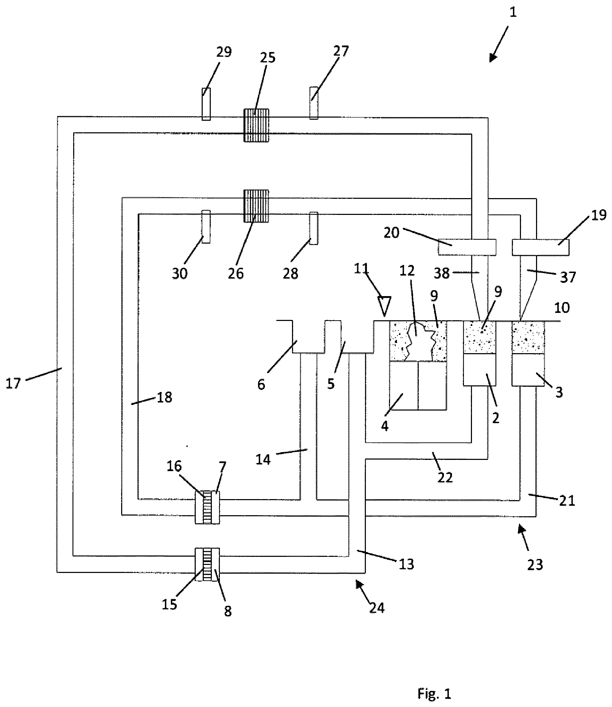

Fig. 1 zeigt eine Lasersintervorrichtung 1 mit Dosierkammern 2 und 3, einer Baukammer 4, Überlaufkammern 5 und 6 sowie Pulverrückgewinnungseinrichtungen 7 und 8. In den Dosierkammern 2 und 3 werden unterschiedliche Aufbaumaterialien 9 und 10 bevorratet. Durch die Aufbringvorrichtung 11 wird das Aufbaumaterial 9 von der Dosierkammer 2, die der Baukammer 4 am nächsten gelegen ist, zur Baukammer 4 transportiert. Die jeweils oberste Schicht Aufbaumaterial 9 in der Baukammer 4 wird mit einer nicht dargestellten Bestrahlungseinrichtung an den gewünschten Stellen zur Herstellung eines dreidimensionalen Objektes 12 verfestigt. Das für die Baukammer 4 überschüssige Aufbaumaterial 9 wird in der Überlaufkammer 5 aufgefangen. Auch die Überlaufkammer 5 ist diejenige Überlaufkammer, die der Baukammer 4 am nächsten liegt. Von den Überlaufkammern 5 und 6 führen Ableitungen 13 und 14 zu den Pulverrückgewinnungseinrichtungen 7 und 8. Die Ableitungen 13 und 14 sind Schläuche, die von den Überlaufkammern 5 und 6 zu den Pulverrückgewinnungseinrichtungen 7 und 8 führen, durch die das Aufbaumaterial 9 bzw. 10 transportiert wird und die dementsprechend als Förderelemente dienen. In den Pulverrückgewinnungseinrichtungen 7 und 8 befinden sich aufbaumaterialspezifische Filter 15 und 16. Besteht das Aufbaumaterial 9 aus Pulverkörnern mit einem vergleichsweise geringen Durchschnitts-Korndurchmesser, so kann die Porengröße des Filters 15 so an das Aufbaumaterial angepasst werden, dass lediglich einzelne Körner und keine zusammenklebenden Körner durchgelassen werden. Da der Korndurchmesser unterschiedlicher Aufbaumaterialien oder auch bei einem einzigen Aufbaumaterial je nach Anwendungszweck stark variieren kann, kann durch aufbaumaterialspezifische Filter eine Optimierung der Rückgewinnung des Aufbaumaterials gewährleistet werden. Aufbaumaterialspezifische Filter sind also Filter, die in wenigstens einer Größe, bspw. dem Filtermaterial, der Porengröße, etc. an ein bestimmtes Aufbaumaterial angepasst sind.

Unter unterschiedlichen Aufbaumaterialien werden in der vorliegenden Anmeldung Aufbaumaterialien aus unterschiedlichen Materialien verstanden, beispielsweise aus Aluminium oder Platin, es werden aber auch Aufbaumaterialien aus dem gleichen Material, aber verschiedenen Durchschnittskorndurchmessern verstanden. Beispielsweise zeigt Aluminium bei einem Durchschnittskorndurchmesser von 10 µm ein teilweise anderes Verhalten als Aluminium mit einem Durchschnittskorndurchmesser von 20 µm.

Die entsprechenden Saugvorrichtungen zum Absaugen des Aufbaumaterials aus den Überlaufkammern 5 und 6 sind nicht dargestellt, aber bekannt.

Von den Pulverrückgewinnungseinrichtungen 7 und 8 führen dann Leitungen 17 und 18 zu Nachfüllvorrichtungen 19 und 20. Mit der Nachfüllvorrichtung 19 wird über die Zuleitung 37 die Dosierkammer 3 nachgefüllt und mittels der Nachfüllvorrichtung 20 über die Zuleitung 38 die Dosierkammer 2. Um nach dem Bauvorgang überschüssiges Aufbaumaterial aus den Dosierkammern 2 und 3 zurückzuführen, sind entsprechende Ableitungen 21 und 22 vorgesehen, die auch zu den Pulverrückgewinnungseinrichtungen 7 und 8 führen.

Die Lasersintereinrichtung 1 verfügt so über einen geschlossenen Pulverkreislauf 24 für das Aufbaumaterial 9, bestehend aus der Dosierkammer 2, der Ableitung 22, der Überlaufkammer 5, der Ableitung 13, der Pulverrück- gewinnungseinrichtung 8 mit Filter 15 und der Leitung 17.

Entsprechende Vorrichtungen mit den Bezugszeichen 3, 21, 6, 14, 7, 16, 18 und 19 sind für das Aufbaumaterial 10 ebenfalls vorhanden und bilden den Pulverkreislauf 23. Diese geschlossenen Pulverkreisläufe 23 und 24 bieten mehrere Vorteile.

Da nach dem Bauvorgang lediglich die Baukammer 4 aus der Lasersintervorrichtung entnommen wird, kommt es innerhalb der geschlossenen Pulverkreisläufe 23 und 24 zu keinerlei Kontaminationen mehr. Weiterhin können die Ableitungen 13 und 22 sowie die Leitung 17 speziell an die Eigenschaften des Aufbaumaterials 9 angepasst werden. Ebenso können die entsprechenden Leitungen des Pulverkreislaufes 23 an das Aufbaumaterial 10 angepasst werden. Zusätzlich ist es möglich, für jedes Aufbaumaterial 9 oder 10 jeweils optimierte Heizvorrichtungen 25 und 26 oder Temperatursensoren 27 oder Restsauerstoffsensoren 29 und 30 anzubringen. Allgemeiner formuliert können aufgrund der redundanten Auslegung wenigstens zweier Förderelemente beliebige Sensoreinrichtungen und/oder Aufbaumaterialbehand-
lungseinrichtungen an einem Förderelement angebracht werden, die aufbaumaterialoptimiert sind. Unter einer redundanten Auslegung wird dabei im allgemeinsten Sinne verstanden, dass wenigstens ein Förderelement von der Funktion her gesehen, doppelt vorhanden ist, dass also eine Zuleitung zu einer Dosierkammer 2 oder 3 oder einer Ableitung 21, 22 bzw. 13 und 14 doppelt vorhanden ist, so dass zumindest für ein Aufbaumaterial ein eigenes Förderelement vorliegt. Je nach Einsatzart und Verwendungszweck der in einer Lasersintereinrichtung verwendeten Aufbaumaterialien ist das am meisten verwendete Aufbaumaterial oder die meisten verwendeten Aufbaumaterialien mit eigenen Zu- und Ableitungen zu versehen, während seltener genutzte Aufbaumaterialien einen eigenen Pulverkreislauf erhalten. In diesem Pulverkreislauf sind dann die Förderelemente jeweils auszuwechseln, was im Hinblick auf die seltene Verwendung nicht mehr so stark ins Gewicht fällt.

Es ist also nicht nötig, dass für jedes einzelne in einer Lasersintervorrichtung verwendete Aufbaumaterial ein eigener Pulverkreislauf installiert wird, es ist vielmehr ausreichend, diese für die hauptsächlich verwendeten Pulver vorzusehen.

Dabei ist es auch möglich, zwei oder mehr Aufbaumaterialien durch einen einzigen Pulverkreislauf laufen zu lassen, sofern diese ähnlich genug sind. Unterscheiden sich zwei Aufbaumaterialien, wie es oben definiert wurde, lediglich geringfügig in ihrem durchschnittlichen Korndurchmesser, beispielsweise 12 und 15 µm, so ist es möglich, diese beiden Aufbaumaterialien in einem einzigen Pulverkreislauf, beispielsweise dem Pulverkreislauf 23 zu verwenden. Mögliche Restrückstände des einen Aufbaumaterials in einem Förderelement oder einer Pulvervorratskammer führen dann nämlich zu keiner Kontamination des anderen Aufbaumaterials, sondern allenfalls zu einer nicht merklichen Erhöhung oder Absenkung der durchschnittlichen Korngröße.

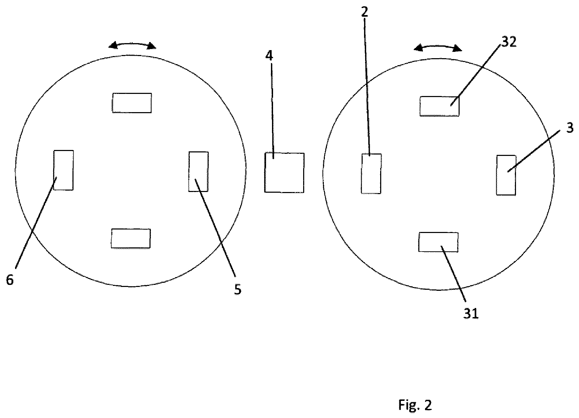

Fig. 2 zeigt eine erfindungsgemäße Anordnung von Dosierkammern und Überlaufkammern um eine Baukammer 4 herum. Die Dosierkammern 2, 3, 31 und 32 sind dabei drehbar auf einem Drehtisch gelagert, so dass jeweils eine der Dosierkammern 2, 3, 31 oder 32 in die Nähe der Baukammer 4 gebracht werden kann. Mögliche Ableitungen unterhalb der Dosierkammern 2, 3, 31 und 32 weisen dementsprechend beispielsweise einen Balg auf, so dass sie eine gewisse Längenverstellbarkeit bieten. Die Verdrehbarkeit des die Dosierkammern 2, 3, 31 und 32 aufweisenden Drehtisches ist eingeschränkt, so dass die Ableitungen nicht so stark verdrillt werden oder gar reißen. Auf diese Art und Weise lassen sich vier getrennte Pulverkreisläufe realisieren. Die Anordnung, bspw. der Aufbringvorrichtung 11 kann also konstant bleiben, nur die Dosierkammer wird jeweils zum Wechseln des Aufbaumaterials verschoben.

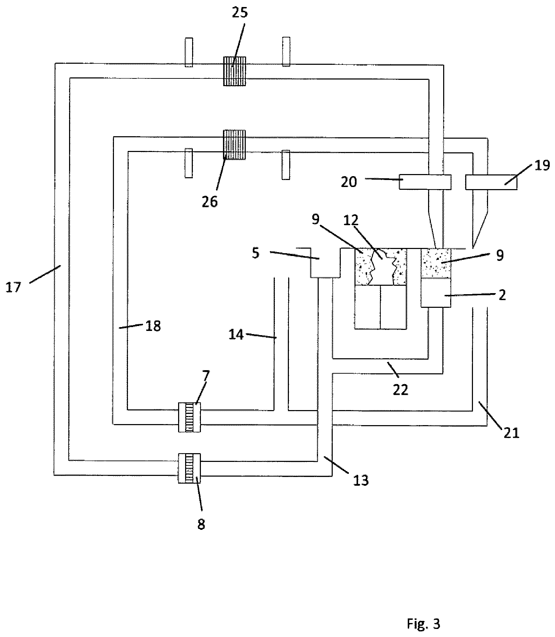

Fig. 3 zeigt einen von Fig. 1 leicht abweichenden Aufbau, bei dem jeweils lediglich eine Dosierkammer 2 und eine Überlaufkammer 5 vorhanden sind. Wird mit dem Aufbaumaterial 9 gebaut, so befinden sich die Ableitung 13, die Pulverrückgewinnungseinrichtung 8 mit Filter 15, die Leitung 17, usw., also die Förderelemente des Pulverkreislaufes 23 gemäß Fig. 1 im Einsatz. Bei einem Wechsel des Aufbaumaterials, beispielsweise zum Aufbaumaterial 10, müssten die Überlaufkammer 5 und die Dosierkammer 2 entleert und gereinigt werden. Die Dosierkammer 2 und die Überlaufkammer 5 können wie die Baukammer 4 auch vollständig entnommen werden. Insbesondere ist es möglich, die Dosierkammer 2, die Baukammer 4 und die Überlaufkammer 5 in einem Baumodul zu vereinen, das dann als ganzes entnehmbar ist. Insbesondere ist es möglich, für jedes Aufbaumaterial ein eigenes Baumodul vorzusehen. Dann sind nur noch die Leitungen 17 und 18, oder 21, 22, 13 und 14 an die jeweiligen Anschlüsse der Dosierkammer 2 oder Überlaufkammer 5 eines Baumoduls anzuschließen. Ein Wechsel von Förderelementen in Form von Zuleitungen oder Ableitungen ist nur noch nötig, wenn ein Pulverkreislauf, der für selten anfallende Pulver vorgesehen ist, ausgetauscht werden muss.

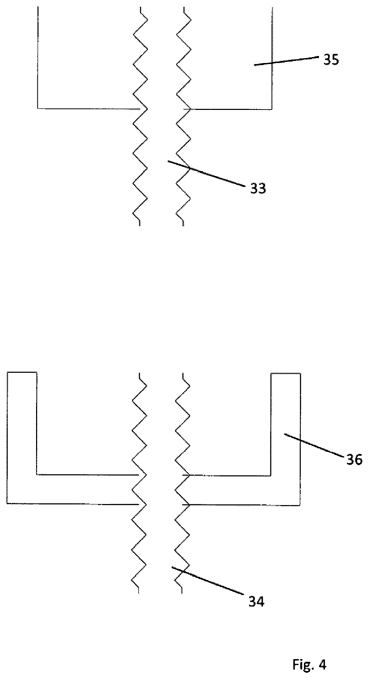

Fig. 4 zeigt eine mögliche Gestaltung von Anschlusselementen, mit der Baumodule oder auch einzelne Dosierkammern oder Überlaufkammern einem Pulverkreislauf bzw. entsprechenden Förderelementen zugeordnet werden können. Hierfür ist vorgesehen, dass die Anschlusselemente eine derartige Form aufweisen, dass ein Förderelement immer nur zu einer einzigen Dosierkammer, Überlaufkammer oder einem Baumodul passt. Beispielsweise können das Förderelement ein Außengewinde 33 und die Dosierkammer, Überlaufkammer oder sonstige Anschlussstellen ein Innengewinde 34 besitzen. Damit nun ein Förderelement beispielsweise des Pulverkreislaufes 23 nur an die Dosierkammer 3 oder ein entsprechendes Baumodul anschließbar ist, hat das Förderelement einen Umlaufring 35 mit einer quadratischen Grundfläche. An der Dosierkammer etc. ist dagegen ein entsprechender Aufnahmering 36 vorgesehen, in den der Umlaufring 35 aufgrund der Formgebung hineinpasst. Weisen andere Förderelemente statt eines Umlaufrings mit quadratischem Querschnitt, beispielsweise einen Umlaufring mit dreieckigem, kreisförmigem, elliptischem oder sonst wie gestalteten Querschnitt auf, so passen diese nicht in den Aufnahmering 36, sondern lediglich in entsprechend gestaltete Aufnahmeringe. Dadurch kann sichergestellt werden, dass die Pulverkreisläufe auch bei austauschbaren Baumodulen oder Dosierkammern immer getrennt bleiben.

### BEZUGSZEICHENLISTE

- 1: Lasersintervorrichtung
- 2: Dosierkammer
- 3: Dosierkammer
- 4: Baukammer
- 5: Überlaufkammer
- 6: Überlaufkammer
- 7: Pulverrückgewinnungseinrichtung
- 8: Pulverrückgewinnungseinrichtung
- 9: Aufbaumaterial
- 10: Aufbaumaterial
- 11: Aufbringvorrichtung
- 12: Objekt
- 13: Ableitung
- 14: Ableitung
- 15: Filter
- 16: Filter
- 17: Leitung
- 18: Leitung
- 19: Nachfüllvorrichtung
- 20: Nachfüllvorrichtung
- 21: Ableitung
- 22: Ableitung
- 23: Pulverkreislauf
- 24: Pulverkreislauf
- 25: Heizvorrichtung
- 26: Heizvorrichtung
- 27: Temperatursensor
- 28: Temperatursensor
- 29: Restsauerstoffsensor
- 30: Restsauerstoffsensor
- 31: Dosierkammer
- 32: Dosierkammer
- 33: Außengewinde
- 34: Innengewinde
- 35: Umlaufring
- 36: Aufnahmering
- 37: Zuleitung
- 38: Zuleitung

## Patentansprüche

1. Vorrichtung (1) zur additiven Herstellung dreidimensionaler Objekte (12) mittels einem Lasersinter- oder Laserschmelzverfahren, wobei die Vorrichtung (1) umfasst:
- eine in einem Gehäuse untergebrachte Baukammer (4);
- eine erste Dosierkammer (2, 3, 31, 32);
- wenigstens eine zweite Dosierkammer (2, 3, 31, 32);
- eine Aufbringvorrichtung zum Aufbringen von Schichten des Aufbaumaterials;
**gekennzeichnet durch**
- einen ersten Pulverkreislauf, welcher ein erstes Förderelement umfasst, welches eingerichtet ist, ein erstes Baumaterial zu transportieren; und einen zweiten Pulverkreislauf, welcher ein zweites Förderelement umfasst, welches eingerichtet ist, ein zweites Baumaterial zu transportieren;
wobei die zwei Förderelemente (13, 17, 22; 14, 18, 21 zum Transport unterschiedlicher Aufbaumaterialien (9, 10) getrennte Zuleitungen (37, 38) zu wenigstens einer Dosierkammer (2, 3), umfassen,
wobei der erste Pulverkreislauf eine erste Zuleitung umfasst, welche eingerichtet ist, das erste Baumaterial der ersten Dosierkammer (2, 3, 31, 32) zuzuführen, und der zweite Pulverkreislauf eine zweite Zuleitung umfasst, welche eingerichtet ist, das zweite Baumaterial der wenigstens einen zweiten Dosierkammer (2, 3, 31, 32) zuzuführen; und
wobei die erste Dosierkammer (2, 3, 31, 32) und die wenigstens eine zweite Dosierkammer (2, 3, 31, 32) drehbar auf einem Drehtisch gelagert sind, so dass jeweils eine der Dosierkammern (2, 3, 31, 32) in die Nähe der Baukammer (4) gebracht werden kann.

2. Vorrichtung nach Anspruch 1, wobei die erste Dosierkammer (2, 3, 31, 32) ein erstes Dosier-Verbindungselement mit einer ersten Form umfasst; und/oder wobei die zweite Dosierkammer (2, 3, 31, 32) ein zweites Dosier-Verbindungselement mit einer zweiten Form umfasst.

3. Vorrichtung nach einem der vorhergehenden Ansprüche, wobei die Dosierkammern (2, 3, 31, 32) austauschbar und mit einer Ableitung (13, 14, 21, 22) verbindbar sind.

4. Vorrichtung nach einem der vorhergehenden Ansprüche, ferner umfassend:
eine erste Überlaufkammer, und
wenigstens eine zweite Überlaufkammer; wobei
die erste Überlaufkammer und die zweite Überlaufkammer drehbar auf einem Drehtisch gelagert sind, so dass jeweils eine der Überlaufkammern in die Nähe der Baukammer (4) gebracht werden kann.

5. Vorrichtung nach Anspruch 4, umfassend eine erste Ableitung, wobei die erste Ableitung eingerichtet ist, überschüssiges erstes Baumaterial von der ersten Überlaufkammer und/oder von der ersten Dosierkammer aufzunehmen; und/oder eine zweite Ableitung, wobei die zweite Ableitung eingerichtet ist, überschüssiges zweites Baumaterial von der zweiten Überlaufkammer und/oder von der wenigstens einen zweiten Dosierkammer aufzunehmen.

6. Vorrichtung nach Anspruch 5, wobei die die erste Überlaufkammer ein erstes Überlauf-Verbindungselement mit einer ersten Form umfasst; und/oder wobei die zweite Überlaufkammer ein zweites Überlauf-Verbindungselement mit einer zweiten Form umfasst.

7. Vorrichtung nach Anspruch 5, wobei die erste Überlaufkammer und die zweite Überlaufkammer miteinander austauschbar sind.

8. Vorrichtung nach einem der vorhergehenden Ansprüche, wobei an wenigstens einem Förderelement (13, 14, 17, 18, 21, 22, 37, 38) eine Sensoreinrichtung (27, 28, 29, 30) und/oder Aufbaumaterialbehandlungseinrichtung (25, 26) angeordnet ist.

9. Vorrichtung nach Anspruch 8, wobei an wenigstens einem Förderelement (13, 14, 17, 18, 21, 22, 37, 38) ein Temperatursensor (27, 28) und/oder Drucksensor und/oder Restsauerstoffsensor (29, 30) angeordnet ist.

10. Vorrichtung nach Anspruch 8, wobei an wenigstens einem Förderelement (13, 14, 17, 18, 21, 22, 37, 38) eine Heizvorrichtung (25, 26) und/oder eine Kühleinrichtung angeordnet ist.

11. Vorrichtung nach einem der vorhergehenden Ansprüche, wobei wenigstens ein Förderelement (13, 14, 17, 18, 21, 22, 37, 38) mit einer Pulverrückgewinnungseinrichtung (7, 8) verbindbar oder verbunden ist, wobei an oder in wenigstens einem Förderelement (13, 14, 17, 18, 21, 22, 37, 38) und/oder einer Pulverrückgewinnungseinrichtung (7, 8) ein aufbau-materialspezifischer Filter (15, 16) angeordnet ist.

## Claims

1. Device (1) for additive manufacturing of three-dimensional objects (12) by means of a laser sintering or laser melting process, wherein the device (1) comprises:
- a building chamber (4) housed in a housing;
- a first dosing chamber (2, 3, 31, 32);
- at least one second dosing chamber (2, 3, 31, 32);
- a device for applying layers of the superstructure material; **identified by**
- a first powder circuit comprising a first conveying element, which is set up to transport a first building material; and a second powder circuit comprising a second conveying element which is designed to transport a second building material;
wherein the two support elements (13, 17, 22; 14, 18, 21) for the transport of different construction materials (9, 10) separate feed lines (37, 38) to at least one dosing chamber (2, 3), comprise,
wherein the first powder circuit comprises a first supply line which is configured to supply the first building material to the first dosing chamber (2, 3, 31, 32), and the second powder circuit comprises a second supply line which is configured to supply the second building material to the at least one second dosing chamber (2, 3, 31, 32); and
wherein the first dosing chamber (2, 3, 31, 32) and the at least one second dosing chamber (2, 3, 31, 32) are rotatably mounted on a rotary table, so that one of the dosing chambers (2, 3, 31, 32) can be brought into the vicinity of the construction chamber (4).

2. Device according to claim 1, wherein the first dosing chamber (2, 3, 31, 32) comprises a first dosing connecting element having a first shape; and/or wherein the second dosing chamber (2, 3, 31, 32) comprises a second dosing connecting element having a second shape.

3. Device according to one of the preceding claims, wherein the dosing chambers (2, 3, 31, 32) are interchangeable and connected to a derivative (13, 14, 21, 22).

4. Device according to any one of the preceding claims, further comprising:
a first overflow chamber, and
at least one second overflow chamber; where:
the first overflow chamber and the second overflow chamber are rotatably mounted on a rotary table so that one of the overflow chambers can be brought into the vicinity of the construction chamber (4).

5. Device according to claim 4, comprising a first discharge, wherein the first discharge is arranged to receive excess first building material from the first overflow chamber and / or from the first dosing chamber; and/or a second discharge, wherein the second discharge is arranged to absorb excess second building material from the second overflow chamber and/or from the at least one second dosing chamber.

6. Device according to claim 5, wherein said first overflow chamber comprises a first overflow connecting element having a first shape; and/or wherein the second overflow chamber comprises a second overflow connecting element having a second shape.

7. Device according to claim 5, wherein the first overflow chamber and the second overflow chamber are interchangeable.

8. Device according to one of the preceding claims, wherein at least one conveying element (13, 14, 17, 18, 21, 22, 37, 38) a sensor device (27, 28, 29, 30) and / or superstructure material treatment device (25, 26) is arranged.

9. Device according to claim 8, wherein at least one conveying element (13, 14, 17, 18, 21, 22, 37, 38) a temperature sensor (27, 28) and / or pressure sensor and / or residual oxygen sensor (29, 30) is arranged.

10. Device according to claim 8, wherein at least one conveying element (13, 14, 17, 18, 21, 22, 37, 38) a heating device (25, 26) and / or a cooling device is arranged.

11. Device according to one of the preceding claims, wherein at least one conveying element (13, 14, 17, 18, 21, 22, 37, 38) is connectable or connected to a powder recovery device (7, 8), wherein on or in at least one conveying element (13, 14, 17, 18, 21, 22, 37, 38) and / or a powder recovery device (7, 8) a build-up-material-specific filter (15, 16) is arranged.

## Revendications

1. Dispositif (1) pour la fabrication additive d'objets tridimensionnels (12) au moyen d'un procédé de frittage ou de fusion au laser, le dispositif (1) comprenant:
- une chambre de construction logée dans un boîtier (4);
- une première chambre de dosage (2, 3, 31, 32);
- au moins une deuxième chambre de dosage (2, 3, 31, 32);
- un dispositif d'application pour l'application de couches de la superstructure;
**caractérisée par:**
- un premier circuit de poudre comprenant un premier élément de convoyage qui est mis en place pour transporter un premier matériau de construction; et un deuxième circuit de poudre comprenant un deuxième élément de convoyage qui est mis en place pour transporter un deuxième matériau de construction;
où les deux éléments de soutien (13, 17, 22; 14, 18, 21) pour le transport de différents matériaux de superstructure (9, 10) comprennent des conduites d'alimentation séparées (37, 38) vers au moins une chambre de dosage (2, 3),
le premier circuit de poudre comprend une première conduite d'alimentation qui est aménagée pour alimenter le premier matériau de construction de la première chambre de dosage (2, 3, 31, 32) et le second circuit de poudre comprend une deuxième conduite d'alimentation qui est aménagée pour alimenter le deuxième matériau de construction d'au moins une deuxième chambre de dosage (2, 3, 31, 32); et
où la première chambre de dosage (2, 3, 31, 32) et au moins une deuxième chambre de dosage (2, 3, 31, 32) sont placées de manière rotative sur une table rotative, de sorte que l'une des chambres de dosage (2, 3, 31, 32) puisse être placée à proximité de la chambre de construction (4).

2. Dispositif selon la revendication 1, dans lequel la première chambre de dosage (2, 3, 31, 32) comprend un premier élément de liaison de dosage ayant une première forme; et/ou dans laquelle la deuxième chambre de dosage (2, 3, 31, 32) comprend un deuxième élément de liaison de dosage ayant une deuxième forme.

3. Dispositif selon l'une quelconque des revendications précédentes, dans lequel les chambres de dosage (2, 3, 31, 32) sont interchangeables et peuvent être reliées à une dérivation (13, 14, 21, 22).

4. Dispositif selon l'une quelconque des revendications précédentes, comprenant en outre:
une première chambre de débordement, et
au moins une deuxième chambre de trop-plein; dans laquelle:
la première chambre de trop-plein et la deuxième chambre de trop-plein sont montées de manière rotative sur une table rotative de sorte que l'une des chambres de trop-plein puisse être placée à proximité de la chambre de construction (4).

5. Dispositif selon la revendication 4, comprenant une première dérivation, dans lequel la première dérivation est mise en place pour recevoir le premier matériau de construction excédentaire de la première chambre de trop-plein et/ou de la première chambre de dosage; et/ou une deuxième dérivation, la deuxième dérivation étant aménagée pour recevoir les excédents de second matériau de construction de la deuxième chambre de trop-plein et/ou d'au moins une deuxième chambre de dosage.

6. Dispositif selon la revendication 5, dans lequel la première chambre de débordement comprend un premier élément de liaison de débordement ayant une première forme; et/ou dans laquelle la deuxième chambre de trop-plein comprend un deuxième élément de connexion de trop-plein ayant une deuxième forme.

7. Dis positif selon la revendication 5, dans lequel la première chambre de débordement et la deuxième chambre de débordement sont interchangeables.

8. Dispositif selon l'une quelconque des revendications précédentes, dans lequel au moins un élément de convoyeur (13, 14, 17, 18, 21, 22, 37, 38) est équipé d'un dispositif de capteur (27, 28, 29, 30) et/ou d'un dispositif de traitement des matériaux de superstructure (25, 26).

9. Dispositif selon la revendication 8, dans lequel au moins un élément de transport (13, 14, 17, 18, 21, 22, 37, 38) est équipé d'un capteur de température (27, 28) et/ou d'un capteur de pression et/ou d'oxygène résiduel (29, 30).

10. Dispositif selon la revendication 8, dans lequel au moins un élément de transport (13, 14, 17, 18, 21, 22, 37, 38) est équipé d'un dispositif de chauffage (25, 26) et/ou d'un dispositif de refroidissement.

11. Dispositif selon l'une quelconque des revendications précédentes, dans lequel au moins un élément de convoyeur (13, 14, 17, 18, 21, 22, 37, 38) est liable ou relié à un dispositif de récupération de poudre (7, 8), dans lequel au moins un élément de convoyeur (13, 14, 17, 18, 21, 22, 37, 38) et/ou un dispositif de récupération de poudre (7, 8) est disposé sur ou dans un filtre spécifique au matériau de construction (15, 16).
